# DEMANDE DE BREVET EUROPEEN

(11) **EP 1 519 546 A1**
(43) Date de publication de la demande: **30.03.2005**
(21) Numéro de dépôt: 03292347.6
(22) Date de dépôt: 25.09.2003
(51) Int. Cl.: H04M 1/247, H04M 1/725

(54) **Procédé de gestion de services multimédia sur un téléphone mobile**

(71) Demandeur: Bouygues Telecom, 92100 Boulogne Billancourt (FR)
(72) Inventeur: Chastain, Laurent, 75008 Paris (FR); Allombert, Eric, 75008 Paris (FR)
(74) Mandataire: Callon de Lamarck, Jean-Robert

(57) **Abrégé**

L'invention concerne un procédé de gestion de services multimédia sur un téléphone mobile selon lequel :
- l'utilisateur sélectionne un mode de fonctionnement multimédia simplifié du téléphone mobile,
- le téléphone affiche un menu multimédia comportant au plus 10 propositions, chacune des propositions étant associée à une étape relative à l'utilisation de la messagerie multimédia,
- l'utilisateur sélectionne l'une des propositions,
- le téléphone guide alors l'utilisateur pour réaliser l'étape associée à la proposition et affiche ensuite un sous-ensemble de propositions du menu multimédia pouvant être à leur tour sélectionnées par l'utilisateur, ce sous-ensemble de propositions étant associé à la proposition sélectionnée.

Elle concerne également un téléphone mobile comprenant une interface multimédia simplifiée selon laquelle il affiche un menu multimédia comportant au plus 10 propositions, et lorsqu'un utilisateur sélectionne l'une des propositions, le téléphone est apte à guider l'utilisateur pour réaliser l'étape associé à la proposition et à lui proposer ensuite un sous-ensemble de propositions du menu multimédia pouvant être à leur tour sélectionnées par l'utilisateur, ce sous-ensemble de propositions étant associé à la proposition sélectionnée.

## Description

L'invention concerne le domaine des téléphones mobiles multimédia.

Ces téléphones permettent notamment d'envoyer des messages MMS (Multimedia Messaging Service) intégrant au texte des images et/ou du son.

Certains téléphones multimédia comprennent en particulier un appareil photo numérique intégré permettant de « capturer » des images ou des vidéos et de les envoyer à des correspondants. Ils comprennent également des fonctions de navigation sur Internet permettant à l'utilisateur de télécharger du contenu multimédia.

Un des avantages de ces téléphones est qu'ils offrent la possibilité d'envoyer en temps réel vers une adresse email ou vers un autre téléphone mobile des messages associant des éléments multimédia.

L'inconvénient de ces téléphones est que la multiplication des fonctionnalités qu'ils proposent rend leur usage relativement complexe.

En effet, l'accès aux fonctionnalités du téléphone se fait généralement par la sélection de propositions dans des menus successifs. La multiplication des fonctionnalités possibles entraîne une ramification des différents liens entre les différents menus.

Un but de l'invention est de fournir un téléphone mobile multimédia permettant une utilisation simplifiée.

A cet effet, l'invention propose un procédé de gestion de services multimédia sur un téléphone mobile selon lequel :
- l'utilisateur sélectionne un mode de fonctionnement multimédia simplifié du téléphone mobile,
- le téléphone affiche un menu multimédia comportant au plus 10 propositions, chacune des propositions étant associée à une étape relative à l'utilisation de la messagerie multimédia,
- l'utilisateur sélectionne l'une des propositions,
- le téléphone guide alors l'utilisateur pour réaliser l'étape associée à la proposition et affiche ensuite un sous-ensemble de propositions du menu multimédia pouvant être à leur tour sélectionnées par l'utilisateur, ce sous-ensemble de propositions étant associé à la proposition sélectionnée.

Ce procédé permet de présenter à l'utilisateur un menu multimédia simple. De plus, lorsque l'utilisateur a réalisé l'étape associée à la proposition qu'il a sélectionnée, il se voit proposer automatiquement d'autres propositions complémentaires avec l'étape qu'il vient de réaliser.

Il n'a donc pas à rechercher dans l'ensemble des menus du téléphone des propositions susceptibles de l'intéresser.

Ce procédé permet en particulier aux utilisateurs peu familiers de l'usage des fonctionnalités multimédia du téléphone de composer et d'envoyer facilement un MMS ou un email contenant des éléments multimédia ou tout autre type de message.

Dans une mise en oeuvre de ce procédé, le menu multimédia comporte l'une des propositions suivantes :
- capturer du contenu multimédia,
- trouver du contenu multimédia,
- composer un message,
- communiquer avec des destinataires,
- personnaliser l'interface en choisissant un contenu comme fond d'écran, animation d'allumage, écran de veille ou sonnerie.
- accéder à un espace personnel dans lequel sont enregistrés des contenus multimédia ou des messages envoyés ou reçus.

Dans une mise en oeuvre de l'invention, l'utilisateur sélectionne le mode de fonctionnement multimédia simplifié en appuyant sur une touche spécifique dédiée à ce mode de fonctionnement.

Dans un mode de réalisation préféré de l'invention, le téléphone affiche les propositions du menu multimédia sous forme d'icônes.

L'invention concerne également un téléphone mobile multimédia, caractérisé en ce qu'il comprend une interface multimédia simplifiée selon laquelle il affiche un menu multimédia comportant au plus 10 propositions, et lorsqu'un utilisateur sélectionne l'une des propositions, le téléphone est apte à guider l'utilisateur pour réaliser l'étape associé à la proposition et à lui proposer ensuite un sous-ensemble de propositions du menu multimédia pouvant être à leur tour sélectionnées par l'utilisateur, ce sous-ensemble de propositions étant associé à la proposition sélectionnée.

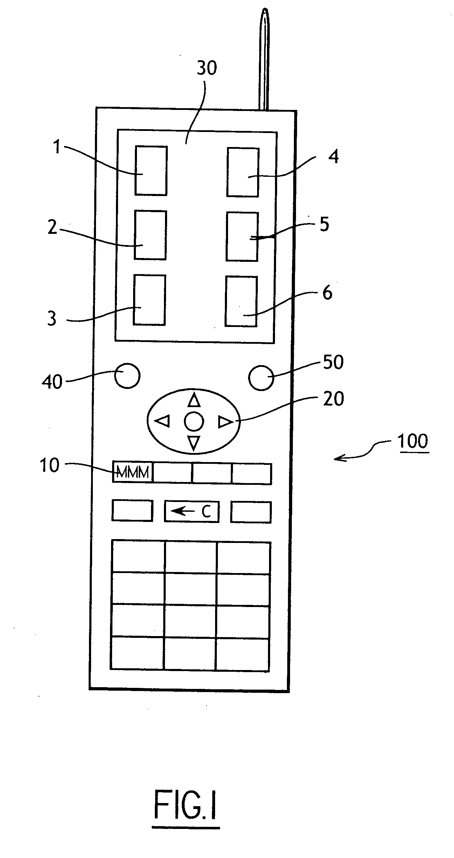

D'autres caractéristiques et avantages ressortiront encore de la description qui suit, laquelle est purement illustrative et non limitative et doit être lue en regard de la figure 1 annexées représentant un téléphone mobile multimédia conforme à un mode de réalisation de l'invention.

Sur la figure 1, le téléphone mobile 100 comprend un bouton « MMM » (MultiMedia Mobile) 10 d'accès à un menu multimédia simplifié du téléphone. Il comprend également un bouton 20 de navigation et de validation pouvant être actionné suivant quatre directions pour déplacer un curseur de sélection sur l'écran 30 ou simplement pressé pour valider une sélection.

Lorsque l'utilisateur actionne le bouton « MMM », un menu s'affiche sur l'écran 30 sous forme d'une matrice d'icônes 1, 2, 3, 4, 5, 6. Ce menu comprend les propositions suivantes :
- capturer (icône 1),
- trouver (icône 2),
- composer (icône 3),
- communiquer (icône 4),
- personnaliser (icône 5),
- espace personnel (icône6).

De manière classique, l'utilisateur valide une sélection en appuyant sur le bouton 20 de navigation et de sélection et retourne à la page qui précède ou annule sa dernière action en appuyant sur le bouton « ← C ».

La sélection des propositions « capturer » ou « trouver » permet à l'utilisateur respectivement de créer un contenu ou de trouver un contenu sur Internet ou tout autre réseau.

La sélection de la proposition « composer » permet à l'utilisateur de créer un message.

La sélection de la proposition « communiquer » permet à l'utilisateur d'envoyer et de recevoir des messages.

La sélection de la proposition « personnaliser » permet à l'utilisateur de modifier certains paramètres relatifs à l'affichage ou à la sonnerie du téléphone en utilisant un contenu multimédia.

La sélection de la proposition « espace personnel » permet à l'utilisateur d'accéder à des moyens mémoires du téléphone réservés au stockage par l'utilisateur de contenus multimédia ou de messages.

### Sélection de la proposition « capturer »

Lorsque l'utilisateur sélectionne l'icône « capturer », le téléphone lui propose de capturer une image, un son, une image avec un son ou une vidéo. L'utilisateur sélectionne l'une de ces propositions.

Pour capturer une image, il appuie sur le bouton « prise de photo » de son combiné, ce qui déclenche une prise d'image par l'appareil numérique intégré au téléphone.

De même, pour prendre un son, il appuie sur le bouton « prise de son » de son combiné pour déclencher l'enregistrement d'un son.

Après avoir enregistré une image ou un son, le téléphone propose directement à l'utilisateur de composer un message incluant l'image ou le son qu'il vient de capturer.

Il affiche notamment les propositions suivantes :
- composer un message,
- choisir au moins un destinataire du message dans un carnet d'adresses,
- envoyer le message au(x) destinataire(s) sélectionné(s), le message incluant la photo et/ou l'enregistrement sonore ou la séquence vidéo,
- stocker le message dans l'espace personnel.

### Sélection de la proposition « trouver »

De manière analogue, lorsque l'utilisateur sélectionne l'icône « trouver » du menu MMM, le téléphone lui propose un menu dans lequel il peut choisir le domaine dans lequel il souhaite trouver un contenu multimédia. Ces domaines peuvent par exemple être regroupés sous les désignations suivantes : multi-médiathèque, sport, sortie, musique, rencontre, humour, favoris, autres, etc. Ce menu propose également d'accéder à un moteur de recherche pour une recherche par mots-clefs sur Internet par le WAP ou l'l-mode par exemple.

Lorsque l'utilisateur a sélectionné un contenu, le téléphone propose à l'utilisateur de composer un message incluant le contenu qu'il vient de trouver.

Il affiche notamment les propositions suivantes :
- composer un message,
- choisir au moins un destinataire du message dans un carnet d'adresses,
- envoyer le message au(x) destinataire(s) sélectionné(s), le message incluant le contenu multimédia sélectionné par l'utilisateur,
- stocker le message dans l'espace personnel.

Dans les deux cas qui précèdent, dès que l'utilisateur a « capturé » ou « trouvé » un contenu, le téléphone mobile propose à l'utilisateur de composer un message pour envoyer ce contenu à un destinataire.

Si l'utilisateur valide cette proposition, le téléphone indique à l'utilisateur de saisir un message textuel. Lorsque le message a été saisi, le téléphone propose à l'utilisateur d'envoyer le message.

Si l'utilisateur valide cette proposition, le téléphone affiche alors le carnet d'adresses dans lequel l'utilisateur peut de manière classique sélectionner des destinataires du message.

Lorsque la sélection est terminée, le message est automatiquement envoyé aux destinataires sélectionnés.

### Sélection de la proposition « composer »

Lorsque l'utilisateur sélectionne l'icône « composer », le téléphone lui propose de rédiger un message textuel. De manière classique, l'utilisateur peut saisir des caractères alphanumériques et des symboles à partir du clavier de son téléphone.

Lorsque l'utilisateur a terminé la saisie du message, il l'indique en actionnant la touche de validation du téléphone.

Le téléphone propose alors à l'utilisateur d'inclure un contenu multimédia au message qu'il vient de composer.

Il affiche notamment les propositions suivantes :
- capturer du contenu multimédia ou trouver du contenu multimédia
ou sélectionner un contenu stocké dans l'espace personnel,
- choisir au moins un destinataire du message dans un carnet d'adresses,
- envoyer le message au(x) destinataire(s) sélectionné(s), le message incluant le contenu multimédia sélectionné par l'utilisateur,
- stocker le message dans l'espace personnel.

### Sélection de la proposition « communiquer »

Lorsque l'utilisateur sélectionne l'icône « communiquer », le téléphone lui propose de consulter les messages qu'il a reçus.

De manière classique, l'utilisateur passe d'un message à l'autre et sélectionne un message en utilisant le bouton de navigation.

A chaque fois qu'un message est présenté à l'écran, le téléphone affiche également les propositions suivantes :
- répondre au message,
- composer un message,
- capturer du contenu multimédia ou trouver du contenu multimédia
ou sélectionner un contenu stocké dans des moyens mémoire du téléphone,
- envoyer le message au(x) destinataire(s) sélectionné(s), le message incluant le contenu multimédia sélectionné par l'utilisateur,
- stocker le message dans les moyens mémoire du téléphone.

### Sélection de la proposition « personnaliser »

Lorsque l'utilisateur sélectionne l'icône « personnaliser », le téléphone affiche les propositions suivantes :
- choisir un fond d'écran,
- choisir une animation d'allumage,
- choisir un écran de veille,
- choisir une sonnerie.

L'utilisateur sélectionne l'une de ces propositions en utilisant la touche de navigation/validation du téléphone. Le téléphone propose alors a l'utilisateur d'utiliser un contenu multimédia comme fond d'écran ou animation d'allumage ou écran de veille ou sonnerie. Ce contenu peut être sélectionné parmi des éléments stockés dans l'espace personnel ou capturé ou trouvé sur Internet.

Le téléphone mobile affiche les propositions suivantes :
- capturer du contenu multimédia ou trouver du contenu multimédia
ou sélectionner un contenu stocké dans des moyens mémoire du téléphone,
- valider le contenu choisi pour qu'il soit utilisé comme fond d'écran
ou animation d'allumage ou écran de veille ou sonnerie.

### Sélection de la proposition « espace personnel »

Lorsque l'utilisateur sélectionne l'icône « espace personnel », le téléphone mobile propose à l'utilisateur un ensemble d'éléments stockés, ces éléments pouvant être des contenus multimédia, des messages sauvegardés dans l'espace personnel, des programmes ou tout autre type d'éléments.

Lorsque l'utilisateur a sélectionné l'élément qui l'intéresse grâce à la touche de navigation/validation, Le téléphone lui propose alors de composer un message à partir de l'élément qu'il a sélectionné.

Le téléphone affiche les propositions suivantes :
- composer un message,
- choisir au moins un destinataire du message dans un carnet d'adresses,
- envoyer le message au(x) destinataire(s) sélectionné(s), le message incluant le contenu multimédia sélectionné par l'utilisateur,
- supprimer la composition stockée des moyens mémoire du téléphone.

On a décrit un exemple de menu multimédia simplifié et les fonctionnalités qui y sont associées.

Bien entendu, d'autres propositions et d'autres fonctionnalités peuvent être incluses dans ce menu.

## Revendications

1. Procédé de gestion de services multimédia sur un téléphone mobile selon lequel :
- l'utilisateur sélectionne un mode de fonctionnement multimédia simplifié du téléphone mobile,
- le téléphone affiche un menu multimédia comportant au plus 10 propositions, chacune des propositions étant associée à une étape relative à l'utilisation de la messagerie multimédia,
- l'utilisateur sélectionne l'une des propositions,
- le téléphone guide alors l'utilisateur pour réaliser l'étape associée à la proposition et affiche ensuite un sous-ensemble de propositions du menu multimédia pouvant être à leur tour sélectionnées par l'utilisateur, ce sous-ensemble de propositions étant associé à la proposition sélectionnée.

2. Procédé selon la revendication 1, **caractérisé en ce que** l'utilisateur sélectionne le mode de fonctionnement multimédia simplifié en appuyant sur une touche spécifique dédiée à ce mode de fonctionnement.

3. Procédé selon l'une des revendications qui précèdent, **caractérisé en ce que** le téléphone affiche les propositions du menu multimédia sous forme d'icônes.

4. Procédé selon l'une des revendications qui précèdent, **caractérisé en ce que** le menu multimédia comprend au moins une proposition consistant à :
- capturer du contenu multimédia,
- trouver du contenu multimédia,
- composer un message,
- communiquer avec des destinataires,
- personnaliser l'interface en choisissant un contenu comme fond d'écran, animation d'allumage, écran de veille ou sonnerie.
- accéder à un espace personnel dans lequel sont enregistrés des contenus multimédia ou des messages envoyés ou reçus.

5. Procédé selon la revendication 4, **caractérisé en ce que** lorsque l'utilisateur sélectionne dans le menu multimédia la proposition capturer du contenu multimédia, le téléphone guide l'utilisateur pour qu'il réalise l'étape suivante :
- prendre une photo et/ou enregistrer une séquence sonore ou enregistrer une séquence vidéo, puis le téléphone affiche la série de propositions suivantes :
- composer un message,
- choisir au moins un destinataire du message dans un carnet d'adresses,
- envoyer le message au(x) destinataire(s) sélectionné(s), le message incluant la photo et/ou l'enregistrement sonore ou la séquence vidéo,
- stocker le message dans l'espace personnel.

6. Procédé selon la revendication 4, **caractérisé en ce que** lorsque l'utilisateur sélectionne dans le menu multimédia la proposition trouver du contenu multimédia, le téléphone guide l'utilisateur pour qu'il réalise l'étape suivante :
- sélectionner un contenu multimédia sur Internet, puis le téléphone affiche la série de propositions suivantes :
- composer un message,
- choisir au moins un destinataire du message dans un carnet d'adresses,
- envoyer le message au(x) destinataire(s) sélectionné(s), le message incluant le contenu multimédia sélectionné par l'utilisateur,
- stocker le message dans l'espace personnel.

7. Procédé selon la revendication 4, **caractérisé en ce que** lorsque l'utilisateur sélectionne dans le menu multimédia la proposition composer un message, le téléphone guide l'utilisateur pour qu'il réalise l'étape suivante :
- saisir un message textuel sur le clavier du téléphone, puis le téléphone affiche la série de propositions suivantes :
- capturer du contenu multimédia ou trouver du contenu multimédia
ou sélectionner un contenu stocké dans l'espace personnel du téléphone,
- choisir au moins un destinataire du message dans un carnet d'adresses,
- envoyer le message au(x) destinataire(s) sélectionné(s), le message incluant le contenu multimédia sélectionné par l'utilisateur,
- stocker le message dans l'espace personnel.

8. Procédé selon la revendication 4, **caractérisé en ce que** lorsque l'utilisateur sélectionne dans le menu multimédia la proposition communiquer avec des destinataires, le téléphone guide l'utilisateur pour qu'il réalise l'étape suivante :
- lire des messages reçus, puis le téléphone affiche la série de propositions suivantes :
- choisir de répondre à un message,
- composer un message,
- capturer du contenu multimédia ou trouver du contenu multimédia
ou sélectionner un contenu stocké dans l'espace personnel du téléphone,
- envoyer le message au(x) destinataire(s) sélectionné(s), le message incluant le contenu multimédia sélectionné par l'utilisateur,
- stocker le message dans les moyens mémoire du téléphone.

9. Procédé selon la revendication 4, **caractérisé en ce que** lorsque l'utilisateur sélectionne dans le menu multimédia la proposition personnaliser l'interface, le téléphone guide l'utilisateur pour qu'il réalise l'étape suivante :
- choisir de modifier un fond d'écran ou une animation d'allumage
ou un écran de veille ou une sonnerie, puis le téléphone affiche la série de propositions suivantes :
- capturer du contenu multimédia ou trouver du contenu multimédia
ou sélectionner un contenu stocké dans l'espace personnel du téléphone,
- valider le contenu choisi pour qu'il soit utilisé comme fond d'écran
ou animation d'allumage ou écran de veille ou sonnerie.

10. Procédé selon la revendication 4, **caractérisé en ce que** lorsque l'utilisateur sélectionne dans le menu multimédia la proposition accéder à un espace personnel, le téléphone guide l'utilisateur pour qu'il réalise l'action suivante :
- choisir une composition stockée dans l'espace personnel du téléphone, puis le téléphone affiche la série de propositions suivantes :
- composer un message,
- choisir au moins un destinataire du message dans un carnet d'adresses,
- envoyer le message au(x) destinataire(s) sélectionné(s), le message incluant le contenu multimédia sélectionné par l'utilisateur,
- supprimer la composition stockée l'espace personnel du téléphone.

11. Téléphone mobile multimédia, **caractérisé en ce qu'**il comprend une interface multimédia simplifiée selon laquelle il affiche un menu multimédia comportant au plus 10 propositions, et lorsqu'un utilisateur sélectionne l'une des propositions, le téléphone est apte à guider l'utilisateur pour réaliser l'étape associé à la proposition et à lui proposer ensuite un sous-ensemble de propositions du menu multimédia pouvant être à leur tour sélectionnées par l'utilisateur, ce sous-ensemble de propositions étant associé à la proposition sélectionnée.
